# EUROPÄISCHE PATENTSCHRIFT

(11) **EP 2 188 602 B1**
(45) Veröffentlichungstag und Bekanntmachung des Hinweises auf die Patenterteilung: **09.08.2017**
(21) Anmeldenummer: 08760835.2
(22) Anmeldetag: 11.06.2008
(51) Int. Cl.: G01F 23/36

(54) **TANKSTANDSGEBER**
TANK LEVEL INDICATOR
DÉTECTEUR DE NIVEAU DE RÉSERVOIR

(30) Priorität: 14.08.2007 DE 102007038428
(43) Veröffentlichungstag der Anmeldung: 26.05.2010
(73) Patentinhaber: Robert Bosch GmbH, 70442 Stuttgart (DE)
(72) Erfinder: FIEDOR, Marian, 73998 Mosty u Jablunkova (CZ); SKRICILOVA, Veronika, 37005 Ceske Budejovice (Budweis) (CZ); TROJAK, Pavel, 38232 Velesin (CZ)
(86) Internationale Anmeldenummer: PCT/EP2008/057282
(87) Internationale Veröffentlichungsnummer: WO 2009/021764

(56) Entgegenhaltungen:
- WO-A-96/41136
- WO-A-2006/132494

## Beschreibung

### Stand der Technik

Die Erfindung geht aus von einem Tankstandsgeber nach Anspruch 1.

Es ist schon ein Tankstandsgeber aus der WO 2006/132494 A1 bekannt, mit einem Sensorgehäuse, in dem eine Widerstandskarte mit einer Widerstandsbahn und ein mit der Widerstandsbahn schleifend zusammenwirkender, um eine Drehachse drehbar gelagerter Schleifer vorgesehen ist. Der variable Drehwiderstand ist in dem Sensorgehäuse gegenüber dem Kraftstoff gekapselt, so dass kein Kraftstoff in das Sensorgehäuse gelangen kann. Nachteilig ist, dass der Schleifer trocken auf der Widerstandsbahn schleift, da dadurch erhöhte Reibung und erhöhter Verschleiß an der Widerstandsbahn auftritt. Die Verschleisspartikel sammeln sich im Sensorgehäuse an und können den Kontakt zwischen dem Schleifer und der Widerstandsbahn nachteilig beeinträchtigen. Alternativ kann das gekapselte Sensorgehäuse mit einer Flüssigkeit gefüllt sein, die Schmiermittel und Anti-Korrosionsmittel enthält. Desweiteren ist bekannt, dass die Widerstandskarte und der Schleifer auf einer Trägerplatte angeordnet sind und gegenüber dem Kraftstoff vollkommen offen liegen.

### Vorteile der Erfindung

Der erfindungsgemäße Tankstandsgeber mit den kennzeichnenden Merkmalen des Hauptanspruchs hat demgegenüber den Vorteil, dass das Sensorgehäuse von Kraftstoff durchströmbar ist und dass dadurch Verschleiss-, Schmutz oder Eispartikel von der Widerstandsbahn der Widerstandskarte abgewaschen und aus dem Tankstandsgeber ausgespült werden. Dies wird erfindungsgemäß erreicht, indem das Sensorgehäuse nur teilweise geschlossen ausgebildet ist und in einem oberen Abschnitt zumindest einen Flüssigkeitseinlass und in einem unteren Abschnitt zumindest einen Flüssigkeitsablauf aufweist, wobei im Bereich des Flüssigkeitsablaufs Mittel zum Zurückhalten von Partikeln angeordnet sind. Auf diese Weise wird der Schutz des Tankstandsgebers vor Partikeln oder Eiskristalllen verbessert.

Durch die in den Unteransprüchen aufgeführten Maßnahmen sind vorteilhafte Weiterbildungen und Verbesserungen des im Hauptanspruch angegebenen Tankstandsgebers möglich.

Besonders vorteilhaft ist, wenn im Bereich des zumindest einen Flüssigkeitsablaufs Mittel zum Zurückhalten von Partikeln oder Eiskristallen angeordnet sind, da auf diese Weise weniger Partikel oder Eiskristalle in den Tankstandsgeber gelangen und die Füllstandsmessung beeinflussen können.

Gemäß einer vorteilhaften Ausführung sind die Mittel zapfenförmig, bolzenförmig oder zylinderförmig ausgebildet. Auf diese Weise ist ein Labyrinth gebildet, in dem sich Partikel oder Eiskristalle verfangen, wenn diese von aussen in den Tankstandsgeber eintreten wollen. Partikel oder Eiskristalle, welche sich innerhalb des Tankstandsgebers befinden, finden einen einfachen Weg nach aussen.

Weiterhin vorteilhaft ist, wenn die Mittel an der einen Seite eben ausgebildet sind und an der gegenüberliegenden Seite Schrägen aufweisen. Auf diese Weise prallen von unten eindringende Partikel oder Eiskristalle an den ebenen Flächen der Mittel ab, so dass diese nicht zur Widerstandsbahn gelangen, und werden von oben her kommende Partikel nach unten weitergeleitet, so dass diese aus dem Bereich der Widerstandsbahn entfernt werden.

Sehr vorteilhaft ist es, wenn das Sensorgehäuse einen Trägerabschnitt und einen am Trägerabschnitt befestigten Deckel aufweist, wobei der Trägerabschnitt die Widerstandskarte und den Schleifer aufnimmt und der Deckel die Widerstandskarte und den Schleifer abdeckt. Der Deckel schützt die Widerstandsbahn daher auf diese Weise vor frontalem und seitlichem "Beschuss" mit Partikeln oder Eiskristalllen.

Auch vorteilhaft ist, wenn der Deckel auf den Trägerabschnitt aufgeclipst ist, da der Deckel auf diese Weise besonders leicht zu montieren ist, so dass die Herstellungskossten verringert werden.

### Zeichnung

Ein Ausführungsbeispiel der Erfindung ist in der Zeichnung vereinfacht dargestellt und in der nachfolgenden Beschreibung näher erläutert.
- Fig.1: zeigt im Schnitt einen erfindungsgemäßen Tankstandsgeber und
- Fig.2: eine Frontansicht eines erfindungsgemäßen Deckels des Tankstandsgebers nach Fig.1.

### Beschreibung des Ausführungsbeispiels

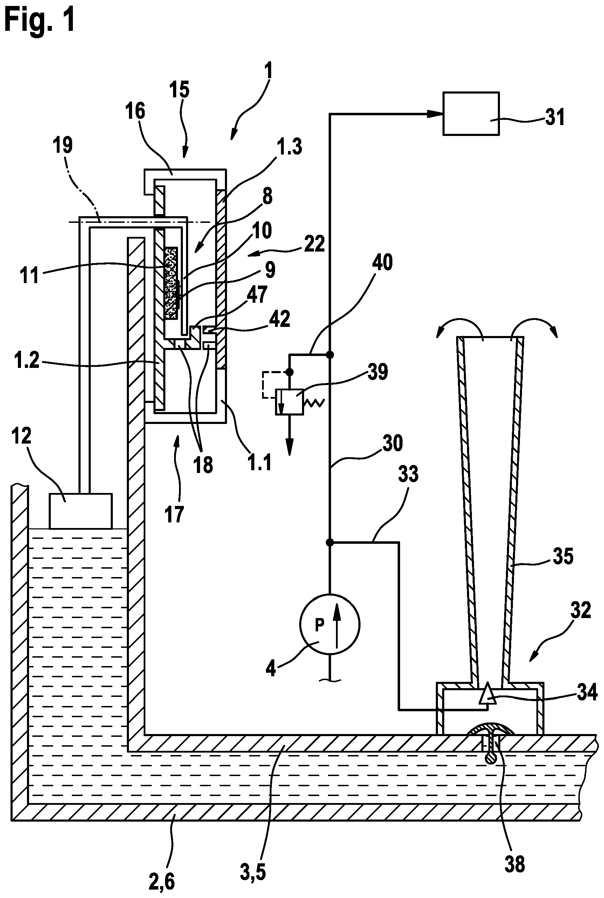

Fig.1 zeigt im Schnitt einen erfindungsgemäßen Tankstandsgeber.

Der Tankstandsgeber 1 ist in einem Kraftstoffbehälter 2 angeordnet und dient dazu, einen Füllstand in dem Kraftstoffbehälter 2 zu ermitteln.Der Tankstandsgeber 1 ist an einer Wandung im Kraftstoffbehälter 2 befestigt, beispielsweise an einem im Kraftstoffbehälter vorgesehenen Speichertopf 3. Der Speichertopf 3 dient dazu, eine vorbestimmte Menge an Kraftstoff für ein im Speichertopf 3 angeordnetes Förderaggregat 4 zu bevorraten, damit dieses auch bei niedrigen Füllständen im Kraftstoffbehälter 2 und beim Beschleunigen, Bremsen, Kurven- und/oder Bergfahren Kraftstoff ansaugen kann. Der Speichertopf 3 ist beispielsweise topfförmig ausgebildet und weist einen Topfboden 5 auf. Der Speichertopf 3 ist an einem Tankboden 6 des Kraftstoffbehälters 2 angeordnet.

Der Tankstandsgeber 1 weist einen Drehwiderstand 8 auf, dessen elektrischer Widerstand variabel ist. Der variable Drehwiderstand 8 weist zumindest eine Schleiferbahn, beispielsweise eine Widerstandsbahn 9 und einen mit der Widerstandsbahn 9 zusammenwirkenden, drehbar gelagerten Schleifer 10 auf. Abhängig von der Position des Schleifers 10 auf der Widerstandsbahn 9 stellt sich ein vorbestimmter elektrischer Widerstand ein. Solche Drehwiderstände sind beispielsweise aus der DE 10 2006 039401 A1 bekannt. Die Widerstandsbahn 9 ist auf einem keramischen Substrat 11 ausgebildet, das als Widerstandskarte 11 bezeichnet wird. Der Schleifer 10 ist mit einem Schwimmer 12 mechanisch gekoppelt, der an der Flüssigkeitsoberfläche des Kraftstoffbehälters 2 schwimmt und Füllstandsänderungen über eine Drehbewegung auf den Schleifer 10 überträgt. Der jeweils eingestellte elektrische Widerstand ist ein Maß für den Füllstand im Kraftstoffbehälter 2.

Der Tankstandsgeber 1 weist ein Sensorgehäuse 1.1 auf, in bzw. an dem die Widerstandskarte 11 und der Schleifer 10 angeordnet sind.

Erfindungsgemäß ist vorgesehen, dass das Sensorgehäuse 1.1 in einem oberen Abschnitt 15 zumindest einen Flüssigkeitseinlass 16 und in einem unteren Abschnitt 17 zumindest einen Flüssigkeitsablauf 18 aufweist. Auf diese Weise ist das Sensorgehäuse 1.1 kraftstoffdurchströmbar, so dass Verschleiß-, Schmutzpartikel oder Eiskristalle durch den Kraftstoff von der Widerstandsbahn 9 abgewaschen werden. Der untere Abschnitt 17 des Sensorgehäuses 1.1 ist dem Topfboden 5 des Speichertopfes 3 zugewandt und der obere Abschnitt 15 des Sensorgehäuses 1.1 dem Topfboden 5 abgewandt.
Das Sensorgehäuse 1.1 wird beispielsweise gebildet von einem Trägerabschnitt 1.2 und einem am Trägerabschnitt 1.2 angeordneten Deckel 1.3. An dem Trägerabschnitt 1.2 ist beispielsweise die Widerstandskarte 11 befestigt und der Schleifer 10 um eine Drehachse 19 drehbar gelagert. Der Deckel 1.3 überdeckt die Widerstandskarte 11 und den Schleifer 10 derart, dass sie von einer Frontseite 22 und beispielsweise von der rechten und linken Seite 23,24 her gegenüber Kraftstoff geschützt sind. Auf diese Weise bildet der Deckel 1.3 ein Schutzschild. Der Flüssigkeitseinlass 16 ist beispielsweise an dem Deckel 1.3 vorgesehen, kann aber ebenso auch am Trägerabschnitt 1.2 ausgebildet sein. Der zumindest eine Flüssigkeitsablauf 18 ist am Trägerabschnitt 1.2 und/oder am Deckel 1.3 ausgeführt. Gemäß dem Ausführungsbeispiel sind 7 Flüssigkeitsabläufe 18 am Deckel 1.3 ausgebildet. Der Deckel 1.3 ist beispielsweise an den Trägerabschnitt 1.2 geclipst, kann aber auch auf andere Weise am Trägerabschnitt 1.2 befestigt sein.

Das in dem Speichertopf 3 angeordnete Förderaggregat 4 saugt Kraftstoff aus dem Speichertopf 3 an und fördert diesen druckerhöht über eine Druckleitung 30 zu einer Brennkraftmaschine 31. Zur Befüllung des Speichertopfes 3 mit Kraftstoff ist eine Saugstrahlpumpe 32 vorgesehen, die über eine von der Druckleitung 30 abzweigende Treibleitung 33 angetrieben ist. Die Saugstrahlpumpe 32 weist eine Düse 34 auf, deren Treibstrahl in einen Mischkanal 35 gerichtet ist. Der Treibstrahl reißt auf bekannte Art und Weise umliegenden Kraftstoff mit, wodurch Kraftstoff über eine Ansaugöffnung 38 des Speichertopfes 3 aus dem Kraftstoffbehälter 2 in den Speichertopf 3 angesaugt wird. Der Mischkanal 35 mündet stromab der Düse 34 in den Speichertopf 3. Der Mischkanal 35 ist beispielsweise stehend angeordnet, kann aber ausdrücklich auch liegend, also horizotal angeordnet sein.

Zur Einstellung eines vorbestimmten Drucks in der Druckleitung 30 ist ein Druckregelventil 39 vorgesehen, das ab einem vorbestimmten Druck in der Druckleitung 30 Kraftstoff aus der Druckleitung 30 über einen Rücklauf 40 zurück in den Speichertopf 3 oder in den Kraftstoffbehälter 2 strömen lässt.

Im Kraftstoff können sich bei geringen Temperaturen nahe oder unterhalb vom Gefrierpunkt von Wasser Eispartikel bilden. Diese entstehen im Kraftstoffbehälter 2, wenn das Fahrzeug außer Betrieb ist und geringen Temperaturen ausgesetzt ist. Die Eispartikel sammeln sich nahe dem Tankboden 6 des Kraftstoffbehälters 2 oder nahe dem Topfboden 5 des Speichertopfes 3. Wenn die Brennkraftmaschine 31 gestartet wird, wird Eispartikel enthaltender Kraftstoff von der Saugstrahlpumpe 32 angesaugt und im Speichertopf 3 verteilt und verwirbelt. Da die Widerstandsbahn 9 und der Schleifer 10 des Tankstandsgebers 1 dem Kraftstoff ausgesetzt sind und von diesem umspült sein können, kann es passieren, dass Eispartikel in den Spalt zwischen dem Schleifer 10 und der Widerstandskarte 11 gelangen und den Schleifer 10 derart von der Widerstandsbahn 9 abheben, dass kein Messsignal mehr erhalten und kein Füllstand mehr angezeigt wird. In diesen Fällen ist die Füllstandsanzeige erst wieder funktionsfähig, wenn die Eispartikel nach einer vorbestimmten Zeit nach Motorstart durch die Erwärmung des Kraftstoffs im Krafstoffbehälter 2 geschmolzen sind oder bei der Bewegung von Schleifer 10 von der Widerstandskarte 11 abgewaschen werden.

Insbesondere wenn der Tankstandsgeber in der Nähe der Saugstrahlpumpe 32 und/oder des Rücklaufs 40 des Druckreglers 39 angeordnet ist, können viele Eispartikel in den Tankstandsgeber gelangen.

Diese zeitweisen Ausfälle der Füllstandsanzeige werden erfindungsgemäß vermieden, indem die Widerstandskarte 11 und der Schleifer 10 von dem Deckel 1.3 abgedeckt sind. Der größte Teil der Eispartikel wird auf diese Weise vom Tankstandsgeber abgehalten.

Damit keine Eispartikel von unten her durch den Flüssigkeitsablauf in das Sensorgehäuse 1.1 gelangen, ist im Bereich zumindest eines Flüssigkeitsablaufs 18 zumindest ein Mittel 42 zum Zurückhalten von Partikeln angeordnet, gegen das die Partikel aufgrund ihrer Trägheit prallen und auf diese Weise abgeschieden werden. Die Mittel 42 sind innerhalb des Sensorgehäuses 1.1 derart angeordnet, dass sie den geradlinigen Weg zur Widerstandskarte 11 verstellen, so dass eine Strömungsumlenkung erzwungen wird, durch die die Partikel abgeschieden werden. Die Mittel 42 sind beispielsweise von außen in das Sensorgehäuse 1.1 gesehen hinter dem Flüssigkeitsablauf 18 und beabstandet zu diesem angeordnet.

Auf der dem Flüssigkeitsablauf 18 zugewandten Seite sind die Mittel 42 eben ausgebildet, so dass von dort eintretende Partikel an dieser Seite abprallen und nicht weiter in das Sensorgehäuse 1.1 gelangen. Die Mittel 42 sind derart angeordnet, dass die Flüssigkeitsabläufe 18 in der Projektion zumindest abschnittsweise von einem Mittel 42 abgedeckt sind. Die Mittel 42 haben beispielsweise einen dreieckförmigen, viereckigen, vieleckigen, kreisförmigen oder ovalförmigen Querschnitt und sind zapfenförmig, bolzenförmig, zylinderförmig oder ähnlich ausgebildet.

Die Mittel 42 haben an ihrer dem Flüssigkeitseinlass 16 zugewandten Seite Schrägen, derart, dass von oben her durch den Flüssigkeitseinlass 16 eingetretene Partikel durch die Schrägen zum Flüssigkeitsablauf 18 hin geleitet werden.

Wenn der Füllstand im Kraftstoffbehälter 2 höher ist als der Speichertopf 3 und bei Schwappbewegungen im Kraftstoffbehälter 2, können Partikel oder Eiskristalle durch den Flüssigkeitseinlass 16 in das Sensorgehäuse 1.1 gelangen. Es hat sich herausgestellt, dass die Partikel oder Eiskristalle in diesem Fall überwiegend geradlinig nach unten sinken bzw. fallen und über die Flüssigkeitsabläufe 18 - durch die Mittel 42 nahezu ungehindert - austreten können. Falls Partikel oder Eiskristalle auf der zumindest einen Schleiferbahn liegen sollten, werden diese von dem Schleifer 10 weggeschoben und vom Kraftstoff nach unten mitgespült. Dadurch kommt es zu keinen Aussetzern der Tankstandsanzeige mehr.

Die Eispartikel können mit dem Kraftstoff oder über die Gasphase in den Tankstandsgeber gelangen.

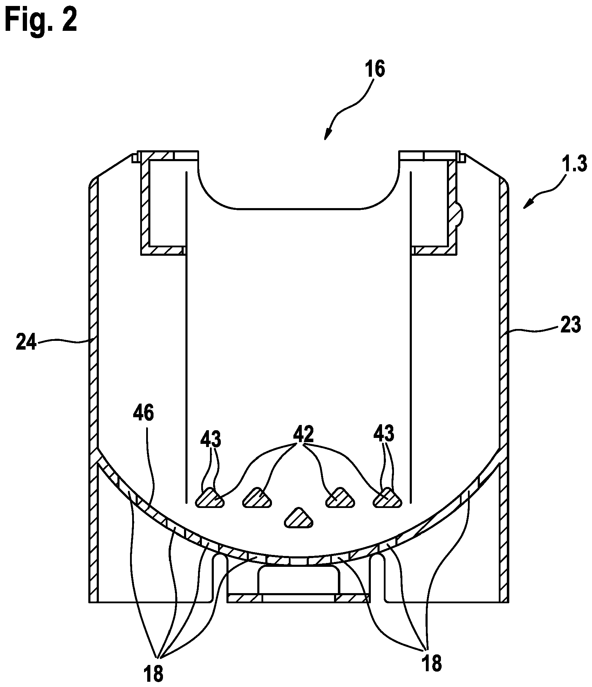

Einige der Flüssigkeitsabläufe 18, beispielsweise sieben, sind an einer stegförmigen Wandung 46 des Deckels 1.3 vorgesehen. Die stegförmige Wandung 46 ist beispielsweise kreisabschnittsförmig ausgebildet (Fig.2) und reicht bis an den Trägerabschnitt 1.2, gemäß dem Ausführungsbeispiel bis an eine Führung 47 des Trägerabschnitts 1.2. In der Führung 47 ist ebenfalls ein Flüssigkeitsablauf 18 vorgesehen. Die Führung 47 begrenzt das axiale Spiel des Schleifers 10.

Fig.2 zeigt eine Frontansicht des erfindungsgemäßen Deckels des Tankstandsgebers nach Fig.1.

Bei dem Deckel nach Fig.2 sind die gegenüber dem Tankstandsgeber nach Fig.1 gleichbleibenden oder gleichwirkenden Teile durch die gleichen Bezugszeichen gekennzeichnet.

Die Mittel 42 zum Zurückhalten von Partikeln sind nebeneinander angeordnet, beispielsweise bilden 4 Mittel 42 eine Reihe und ein fünftes Mittel 42 ist der Reihe vorgelagert.

## Patentansprüche

1. Tankstandsgeber mit einem Sensorgehäuse, in dem eine Widerstandskarte und ein mit der Widerstandskarte schleifend zusammenwirkender, um eine Drehachse drehbar gelagerter Schleifer vorhanden ist, **dadurch gekennzeichnet, dass** das Sensorgehäuse (1.1) in einem oberen Abschnitt (15) zumindest einen Flüssigkeitseinlass (16) und in einem unteren Abschnitt (17) zumindest einen Flüssigkeitsablauf (18) aufweist und dass im Bereich des zumindest einen Flüssigkeitsablaufs (18) Mittel zum Zurückhalten von Partikeln angeordnet sind.

2. Tankstandsgeber nach Anspruch 1, **dadurch gekennzeichnet, dass** die Mittel zapfenförmig, bolzenförmig zylinderförmig ausgebildet sind.

3. Tankstandsgeber nach Anspruch 2, **dadurch gekennzeichnet, dass** die Mittel an der einen Seite eben ausgebildet sind und an der gegenüberliegenden Seite Schrägen aufweisen.

4. Tankstandsgeber nach Anspruch 1, **dadurch gekennzeichnet, dass** das Sensorgehäuse (1.1) einen Trägerabschnitt (1.2) und einen am Trägerabschnitt (1.2) befestigten Deckel (1.3) aufweist, wobei der Trägerabschnitt (1.2) die Widerstandskarte (11) und den Schleifer (10) aufnimmt und der Deckel (1.3) die Widerstandskarte (11) und den Schleifer (10) abdeckt.

5. Tankstandsgeber nach Anspruch 4 **dadurch gekennzeichnet, dass** der zumindest eine Flüssigkeitsablauf (18) an dem Trägerabschnitt (1.2) oder an dem Deckel (1.3) ausgebildet ist.

6. Tankstandsgeber nach Anspruch 4 **dadurch gekennzeichnet, dass** der zumindest eine Flüssigkeitsablauf (18) an einer stegförmigen Wandung des Deckels (1.3) ausgebildet ist, die bis an eine Dichtkante des Trägerabschnitts (1.2) verläuft.

7. Tankstandsgeber nach Anspruch 6, **dadurch gekennzeichnet, dass** die stegförmige Wandung kreisabschnittsförmig bzw. bogenförmig ausgeführt ist.

8. Tankstandsgeber nach Anspruch 4, **dadurch gekennzeichnet, dass** die Mittel zum Zurückhalten von Partikeln an dem Trägerabschnitt (1.2) oder an dem Deckel (1.3) ausgebildet sind.

9. Tankstandsgeber nach Anspruch 4, **dadurch gekennzeichnet, dass** der Deckel (1.3) auf den Trägerabschnitt (1.2) aufgeclipst ist.

## Claims

1. Tank level indicator comprising a sensor housing, in which there is a resistance card and a slider, which is mounted rotatably about an axis of rotation and cooperates in a sliding fashion with the resistance card, **characterized in that** the sensor housing (1.1) has at least one fluid inlet (16) in an upper portion (15) and at least one fluid outlet (18) in a lower portion (17) and **in that** means for trapping particles are arranged in the region of the at least one fluid outlet (18).

2. Tank level indicator according to Claim 1, **characterized in that** the means are of a peg-like, pin-like cylindrical form.

3. Tank level indicator according to Claim 2, **characterized in that** the means are formed flat on the one side and have bevels on the opposite side.

4. Tank level indicator according to Claim 1, **characterized in that** the sensor housing (1.1) has a carrier portion (1.2) and a cover (1.3) secured to the carrier portion (1.2), the carrier portion (1.2) receiving the resistance card (11) and the slider (10) and the cover (1.3) covering the resistance card (11) and the slider (10).

5. Tank level indicator according to Claim 4, **characterized in that** the at least one fluid outlet (18) is formed on the carrier portion (1.2) or on the cover (1.3).

6. Tank level indicator according to Claim 4, **characterized in that** the at least one fluid outlet (18) is formed on a web-like wall of the cover (1.3) that extends as far as a sealing edge of the carrier portion (1.2).

7. Tank level indicator according to Claim 6, **characterized in that** the web-like wall is given the form of a segment of a circle or the form of an arc.

8. Tank level indicator according to Claim 4, **characterized in that** the means for trapping particles are formed on the carrier portion (1.2) or on the cover (1.3).

9. Tank level indicator according to Claim 4, **characterized in that** the cover (1.3) is clipped on the carrier portion (1.2).

## Revendications

1. Détecteur de niveau de réservoir avec un boîtier de capteur, dans lequel il se trouve une carte de résistance et un frotteur coopérant par abrasion avec la carte de résistance et monté de façon rotative autour d'un axe de rotation, **caractérisé en ce que** le boîtier de capteur (1.1) présente dans une partie supérieure (15) au moins une entrée de liquide (16) et dans une partie inférieure (17) au moins une sortie de liquide (18) et **en ce que** des moyens destinés à retenir des particules sont disposés dans la région de ladite au moins une sortie de liquide (18).

2. Détecteur de niveau de réservoir selon la revendication 1, **caractérisé en ce que** les moyens sont réalisés en forme de plot, en forme de boulon ou en forme de cylindre.

3. Détecteur de niveau de réservoir selon la revendication 2, **caractérisé en ce que** les moyens sont de forme plane sur un côté et présentent des pentes sur le côté opposé.

4. Détecteur de niveau de réservoir selon la revendication 1, **caractérisé en ce que** le boîtier de capteur (1.1) présente une partie de support (1.2) et un couvercle (1.3) fixé à la partie de support (1.2), dans lequel la partie de support (1.2) comprend la carte de résistance (11) et le frotteur (10) et le couvercle (1.3) recouvre la carte de résistance (11) et le frotteur (10).

5. Détecteur de niveau de réservoir selon la revendication 4, **caractérisé en ce que** ladite au moins une sortie de liquide (18) est formée sur la partie de support (1.2) ou sur le couvercle (1.3).

6. Détecteur de niveau de réservoir selon la revendication 4, **caractérisé en ce que** ladite au moins une sortie de liquide (18) est formée sur une paroi en forme de nervure du couvercle (1.3), qui s'étend jusqu'à une arête d'étanchéité de la partie de support (1.2).

7. Détecteur de niveau de réservoir selon la revendication 6, **caractérisé en ce que** la paroi en forme de nervure est réalisée en forme de partie de cercle ou en forme d'arc.

8. Détecteur de niveau de réservoir selon la revendication 4, **caractérisé en ce que** les moyens destinés à retenir des particules sont formés sur la partie de support (1.2) ou sur le couvercle (1.3).

9. Détecteur de niveau de réservoir selon la revendication 4, **caractérisé en ce que** le couvercle (1.3) est encliqueté sur la partie de support (1.2).
